# EUROPEAN PATENT APPLICATION

(11) **EP 4 531 505 A1**
(43) Date of publication of application: **02.04.2025**
(21) Application number: 23884373.4
(22) Date of filing: 14.08.2023
(51) Int. Cl.: H05K 5/00

(54) **DISPLAY AND ELECTRONIC DEVICE**

(30) Priority: 04.11.2022 CN 202211378376
(71) Applicant: Honor Device Co., Ltd., Shenzhen, Guangdong 518040 (CN)
(72) Inventor: ZHANG, Zhen, Shenzhen, Guangdong 518040 (CN); YUE, Yongbao, Shenzhen, Guangdong 518040 (CN); WANG, Xiaoyong, Shenzhen, Guangdong 518040 (CN)
(74) Representative: Gill Jennings & Every LLP
(86) International application number: PCT/CN2023/112942
(87) International publication number: WO 2024/093434

(57) **Abstract**

This application relates to the field of display technologies, and provides a display and an electronic device to resolve a problem of how to reduce a black edge width of a display and increase a screen-to-body ratio of the display while ensuring anti-bending and anti-torsional performance of a housing assembly of the display. The display includes a housing assembly and a screen. The housing assembly includes a housing and a first reinforcing member. The housing includes a bottom plate. The bottom plate includes a third edge. The first reinforcing member is disposed on an inner surface of the bottom plate. The first reinforcing member includes a first extension portion. The first extension portion is located at the third edge and extends along the third edge. The screen is located on a side facing the inner surface. The first reinforcing member is located between the screen and the bottom plate. The screen includes a display panel. At least a part of a projection of the first extension portion on the bottom plate is located within a projection of the display panel on the bottom plate. The display provided in this application is configured to display a video or an image.

## Description

This application claims priority to Chinese Patent Application No. 202211378376.7, filed with the China National Intellectual Property Administration on November 04, 2022 and entitled "DISPLAY AND ELECTRONIC DEVICE", which is incorporated herein by reference in its entirety.

### TECHNICAL FIELD

This application relates to the field of display technologies, and in particular, to a display and an electronic device.

### BACKGROUND

An electronic device such as a notebook computer or a desktop computer includes a display, and the display is configured to implement a display function of the electronic device. With the development of technologies, users have increasingly high requirements on a screen-to-body ratio of a display, and a black edge width at an edge of a display interface is also required to be smaller. The black edge width at the edge of the display interface is usually affected by a housing assembly in the display.

In addition, the housing assembly of the display needs to ensure anti-bending and anti-torsional strength to avoid torsion caused by an external force applied to an edge portion (especially an edge corner portion) when the display falls in an open process or in an open state. The torsion forces a screen to deform, resulting in a black screen, light leakage, and even screen breakage. Based on this, the housing assembly usually includes a housing and support members. The support members are disposed on four edges of the housing. The screen is supported and fastened to the support members on the four edges by using a cover plate. The support members reinforce four edge portions of the housing, so that the housing can keep in a rectangular shape, improving the anti-bending and anti-torsional strength of the housing assembly. However, disposing the support members limits further reduction of the black edge width of the screen, making it difficult to further increase the screen-to-body ratio of the display.

### SUMMARY

Embodiments of this application provide a display and an electronic device to resolve a problem of how to reduce a black edge width of a display and increase a screen-to-body ratio of the display while ensuring anti-bending and anti-torsional performance of a housing assembly of the display.

To achieve the foregoing objective, the following technical solutions are used in embodiments of this application.

According to a first aspect, a display is provided. The display includes a housing assembly and a screen. The housing assembly includes a housing and a first reinforcing member. The housing includes a bottom plate. The bottom plate includes a first edge and a second edge that are opposite to each other and a third edge connected between the first edge and the second edge. The bottom plate further includes an inner surface. The first reinforcing member is disposed on the inner surface of the bottom plate. The first reinforcing member includes a first extension portion. The first extension portion is located at the third edge and extends along the third edge. The screen is located on a side facing the inner surface. The first reinforcing member is located between the screen and the bottom plate. The screen includes a display panel. At least a part of a projection of the first extension portion on the bottom plate is located within a projection of the display panel on the bottom plate.

Because the first extension portion is located at the third edge and extends along the third edge, mechanical strength of the housing assembly at the third edge can be improved by using the first extension portion, ensuring anti-bending and anti-torsional characteristics of the housing assembly to some extent, effectively protecting the screen, and avoiding a black screen, light leakage, and even screen breakage of the screen. Based on this, because the at least a part of the projection of the first extension portion on the bottom plate is located within the projection of the display panel on the bottom plate, the display panel covers at least a part of an area of the first extension portion facing away from a surface of the bottom plate, helping increase a screen-to-body ratio of the screen at the third edge. Therefore, a black edge width of the display is reduced and the screen-to-body ratio of the display is increased while ensuring anti-bending and anti-torsional performance of the housing assembly of the display.

In a possible implementation of the first aspect, an entire projection of the first extension portion on the bottom plate is located within the projection of the display panel on the bottom plate. In this way, the display panel covers an entire area of the first extension portion far away from the surface of the bottom plate, further helping increase the screen-to-body ratio of the screen at the third edge.

In a possible implementation of the first aspect, the first reinforcing member further includes a second extension portion. The second extension portion is connected to an end of the first extension portion facing the first edge and extends along the first edge. In this way, the first reinforcing member not only can improve the mechanical strength of the housing assembly at the third edge, but also can improve the mechanical strength of the housing assembly at a corner portion between the third edge and the first edge, avoiding warping of the housing assembly and the screen at the corner portion caused when the electronic device falls in an open state, and avoiding a black screen, light leakage, and even screen breakage of the screen at the corner portion.

In a possible implementation of the first aspect, the first reinforcing member further includes a fifth extension portion. The fifth extension portion is connected to an end of the first extension portion facing the second edge and extends along the second edge. In this way, the first reinforcing member not only can improve the mechanical strength of the housing assembly at the third edge and the corner portion between the third edge and the first edge, but also can improve the mechanical strength of the housing assembly at a corner portion between the third edge and the second edge, avoiding warping of the housing assembly and the screen at the corner portion between the third edge and the second edge, and avoiding a black screen, light leakage, and even screen breakage of the screen at the corner portion.

In a possible implementation of the first aspect, a surface of the first reinforcing member facing away from the bottom plate is provided with a first adhesive layer, and the screen is adhered to the first adhesive layer. In this way, connection stability between the screen and the housing assembly can be improved by using the first adhesive layer, avoiding falloff of the screen from the housing assembly.

In a possible implementation of the first aspect, the inner surface of the bottom plate is provided with a first adhesive layer. The first adhesive layer is located on a side of the first extension portion far away from the third edge, or the first adhesive layer is located between the first extension portion and the third edge. The screen is adhered to the first adhesive layer. In this way, the first adhesive layer and the first reinforcing member do not overlap in thickness in a thickness direction of the display, helping reduce a thickness of the display, or helping increase a thickness of the first reinforcing member to improve anti-bending and anti-torsional performance of the housing assembly.

In a possible implementation of the first aspect, material stiffness of the first reinforcing member is greater than material stiffness of the housing. In this way, anti-bending and anti-torsional strength of the housing assembly at the third edge can be effectively ensured. "Material stiffness" includes bending stiffness (bending stiffness) and torsional stiffness (torsional stiffness). That "material stiffness of the first reinforcing member is greater than material stiffness of the housing" means that bending stiffness of the first reinforcing member is greater than bending stiffness of the housing, and torsional stiffness of the first reinforcing member is greater than torsional stiffness of the housing.

In a possible implementation of the first aspect, a material of the first reinforcing member includes one or more of aluminum, magnesium, iron, copper, and titanium elements; or one or more of plastic and carbon fiber.

In a possible implementation of the first aspect, the bottom plate further includes a fourth edge, the fourth edge is opposite to the third edge, and the fourth edge is connected between the first edge and the second edge. The housing assembly further includes a second reinforcing member, the second reinforcing member is disposed on the inner surface of the bottom plate, the second reinforcing member includes a third extension portion, and the third extension portion is located at the fourth edge and extends along the fourth edge. The third extension portion is located between the screen and the bottom plate, and at least a part of a projection of the third extension portion on the bottom plate is located within the projection of the display panel on the bottom plate. In this way, mechanical strength of the housing assembly at the fourth edge can be improved by using the third extension portion, ensuring anti-bending and anti-torsional characteristics of the housing assembly to some extent, effectively protecting the screen, and avoiding a black screen, light leakage, and even screen breakage of the screen. Based on this, because the at least a part of the projection of the third extension portion on the bottom plate is located within the projection of the display panel on the bottom plate, the display panel covers at least a part of an area of the third extension portion facing away from a surface of the bottom plate, helping increase a screen-to-body ratio of the screen at the fourth edge.

In a possible implementation of the first aspect, an entire projection of the third extension portion on the bottom plate is located within the projection of the display panel on the bottom plate. In this way, the display panel covers an entire area of the third extension portion far away from the surface of the bottom plate, further helping increase the screen-to-body ratio of the screen at the fourth edge.

In a possible implementation of the first aspect, the third extension portion includes a third extension portion body and a magnet body, the third extension portion body and the magnet body are arranged along a length direction of the fourth edge, and the magnet body is located between the third extension portion body and the second edge. In this way, a part of the magnet body forming the second reinforcing member not only can have a reinforcing effect, but also can cooperate with a Hall sensor in a host to detect opening and closing of a cover of the electronic device.

In a possible implementation of the first aspect, the inner surface of the bottom plate is further provided with a fourth adhesive layer. The fourth adhesive layer is disposed on the inner surface of the bottom plate. The fourth adhesive layer is located on a side of the magnet body far away from the fourth edge, or the fourth adhesive layer is located between the magnet body and the fourth edge. The screen is adhered to the fourth adhesive layer. In this way, adhesion strength between the second adhesive layer and the magnet body can be compensated for by using the fourth adhesive layer, improving adhesion robustness between the housing assembly and the screen at the magnet body.

In a possible implementation of the first aspect, the housing further includes a third side plate, the third side plate is connected to the third edge, and the third side plate is located on a periphery of the screen; and Along a thickness direction of the display, a projection of the third side plate on the bottom plate does not overlap a projection of the screen on the bottom plate. In this way, the third side plate does not need to support the screen, and a wall thickness of the third side plate can be made thinner, helping reduce material costs of the housing and increase the screen-to-body ratio of the display.

In a possible implementation of the first aspect, the housing assembly further includes a first support member and a second support member. The first support member and the second support member are disposed on the inner surface of the bottom plate. The first support member is located at the first edge and extends along the first edge, and the second support member is located at the second edge and extends along the second edge. The screen further includes a light-transmitting cover plate, the light-transmitting cover plate is located on a side of the display panel far away from the bottom plate, and the light-transmitting cover plate is stacked on and fixedly connected to the display panel, and the light-transmitting cover plate is fastened to at least a part of the first support member and at least a part of the second support member. In this way, mechanical strength of the housing assembly at the first edge and the second edge can be improved by using the first support member and the second support member. The anti-bending and anti-torsional performance of the housing assembly can be improved to effectively protect the screen and avoid a black screen, light leakage, and even screen breakage of the screen. In addition, the light-transmitting cover plate of the screen is supported and fastened by using the first support member and the second support member, so that connection strength between the screen and the housing assembly can be improved.

In a possible implementation of the first aspect, the light-transmitting cover plate of the screen is fastened, by using the third adhesive layer, to a surface of the first support member far away from the bottom plate. This fastening manner is convenient, the first support member does not need to be grooved and is easy to process, a structure is simple, and costs are relatively low.

In a possible implementation of the first aspect, the light-transmitting cover plate of the screen is provided with a buckle, a surface of the first support member facing away from the first side plate is provided with a clamping slot recessed towards the first side plate, and the light-transmitting cover plate is buckled in the clamping slot by using the buckle. This fastening manner is firm, and stability is relatively high.

In a possible implementation of the first aspect, the first reinforcing member is located between the first support member and the second support member. Along a length direction of the third edge, the first reinforcing member is in contact with or spaced apart from the first support member, and the first reinforcing member is in contact with or spaced apart from the second support member.

In a possible implementation of the first aspect, along a length direction of the third edge, the first reinforcing member is spaced apart from the first support member, and the first reinforcing member is spaced apart from the second support member. A distance between the first reinforcing member and the first support member in the length direction of the third edge and a distance between the first reinforcing member and the second support member in the length direction of the third edge are both less than or equal to 15% of a width of the housing in the length direction of the third edge. In this way, an assembly gap is kept between the first reinforcing member and the first support member and between the first reinforcing member and the second support member, reducing a difficulty in assembling the first reinforcing member between the first support member and the second support member, without affecting the anti-bending and anti-torsional performance of the housing assembly at the third edge.

In a possible implementation of the first aspect, material stiffness of the first reinforcing member is greater than material stiffness of the first support member and the second support member. In this way, it can be ensured that reinforcing effects of the first support member, the second support member, and the first reinforcing member on the housing assembly at three edge portions of the bottom plate are consistent. This layout is appropriate and can reduce costs. "Material stiffness" includes bending stiffness and torsional stiffness. That "material stiffness of the first reinforcing member is greater than material stiffness of the first support member and the second support member" means that bending stiffness of the first reinforcing member is greater than bending stiffness of the first support member and the second support member, and torsional stiffness of the first reinforcing member is greater than torsional stiffness of the first support member and the second support member.

In a possible implementation of the first aspect, at least one end portion of the first support member along the length direction of the first edge is provided with an elastic notch. The elastic notch is configured to increase elasticity of the end portion, to generate elastic compression or stretching along the thickness direction of the display when at least one end of the housing assembly along the length direction of the first edge undergoes warping relative to a middle portion, so that the screen remains flat, avoiding warping of the at least one end of the screen in the length direction of the first edge, and avoiding a black screen or light leakage.

In a possible implementation of the first aspect, the first support member includes a middle portion segment and a first end portion segment that are arranged along the length direction of the first edge, and the first end portion segment forms an end portion of the first support member along the length direction of the first edge. Material stiffness of the first end portion segment is less than material stiffness of the middle portion segment. "Material stiffness" is tension and compression stiffness (tension and compression stiffness) along a direction vertical to the bottom plate. That "material stiffness of the first end portion segment is less than material stiffness of the middle portion segment" means that tension and compression stiffness of the first end portion segment along the direction vertical to the bottom plate is less than tension and compression stiffness of the middle portion segment along the direction vertical to the bottom plate. For example, the middle portion segment is made of a material with larger stiffness such as aluminum alloy, magnesium alloy, iron, copper, titanium, polycarbonate (polycarbonate, PC), PC + glass fiber, ABS plastic (acrylonitrile butadiene styrene plastic), or a carbon fiber composite material; and the first end portion segment is made of a material with larger elasticity such as rubber or silicone. Base on this, the first support member may further include a second end portion segment. The second end portion segment forms another end portion of the first support member along the length direction of the first edge. Material stiffness of the second end portion segment may also be less than the material stiffness of the middle portion segment. The "material stiffness" should be understood in the same way as the "material stiffness" of the first end portion segment and the "material stiffness" of the middle portion segment. Details are not described herein again. In this way, elasticity of the at least one end portion of the first support member along the length direction of the first edge is larger in the direction vertical to the bottom plate, to generate elastic compression or stretching along the thickness direction of the display when at least one end of the housing assembly along the length direction of the first edge undergoes warping relative to a middle portion, so that the screen remains flat, avoiding warping of the at least one end of the screen in the length direction of the first edge, and avoiding a black screen or light leakage.

According to a second aspect, an electronic device is further provided. The electronic device includes a host and the display according to any one of the foregoing technical solutions. The display is provided with a rotating shaft. The display is rotatably connected to the host via the rotating shaft.

Because the electronic device provided in this embodiment of this application includes the display according to any one of the foregoing technical solutions, the electronic device and the display can resolve a same technical problem and achieve a same effect.

### BRIEF DESCRIPTION OF DRAWINGS

FIG. 1 is a three-dimensional diagram of an electronic device according to some embodiments of this application;
FIG. 2 is a diagram of a force applied to the electronic device shown in FIG. 1 in an open process;
FIG. 3 is a diagram of a force applied to the electronic device shown in FIG. 1 when the electronic device falls onto ground in an open state;
FIG. 4 is a three-dimensional diagram of a display according to some embodiments of this application;
FIG. 5 is an exploded view of the display shown in FIG. 4;
FIG. 6 is a front view of an assembly structure of a housing assembly in the display shown in FIG. 5;
FIG. 7 is a three-dimensional diagram of the housing assembly shown in FIG. 6;
FIG. 8 is a partial enlarged view of an area Q of the housing assembly shown in FIG. 7;
FIG. 9 is a diagram of a cross-section structure of the display shown in FIG. 4 along A-A;
FIG. 10 is a diagram of another cross-section structure of the display shown in FIG. 4 along A-A;
FIG. 11 is a diagram of a cross-section structure of the display shown in FIG. 4 along B-B;
FIG. 12 is a diagram of another cross-section structure of the display shown in FIG. 4 along B-B;
FIG. 13 is a diagram of a cross-section structure of the display shown in FIG. 4 along C-C;
FIG. 14 is a front view of a housing assembly according to some other embodiments of this application;
FIG. 15 is a diagram of a cross-section structure of the display shown in FIG. 4 along D-D;
FIG. 16 is a diagram of a cross-section structure of the display shown in FIG. 4 along E-E; and
FIG. 17 is a diagram of a structure of a housing assembly according to some other embodiments of this application.

### DESCRIPTION OF EMBODIMENTS

In embodiments of this application, the terms "first", "second", "third", "fourth", "fifth", and "sixth" are merely intended for a purpose of description, and shall not be understood as an indication or implication of relative importance or implicit indication of a quantity of indicated technical features. Therefore, a feature limited by "first", "second", "third", "fourth", "fifth", or "sixth" may explicitly or implicitly include one or more features.

In embodiments of this application, the term "include", "include", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. An element defined by the phrase "including a ..." does not exclude the presence of the same element in the process, method, object, or apparatus including the element, without more restrictions.

In embodiments of this application, "and/or" describes only an association relationship between associated objects and represents that three relationships may exist. For example, A and/or B may represent the following three cases: Only A exists, both A and B exist, and only B exists. In addition, the character "/" herein generally indicates an "or" relationship between associated objects.

This application provides an electronic device. The electronic device is a type of electronic device including a display. The display is connected to another part in the electronic device as an independent part. The "connection" includes but is not limited to an electrical connection, a rotational connection, a sliding connection, and the like. Specifically, the electronic device includes but is not limited to a notebook computer, a desktop computer, a tablet computer, a laptop computer (laptop computer), and a personal digital assistant (personal digital assistant, PDA).

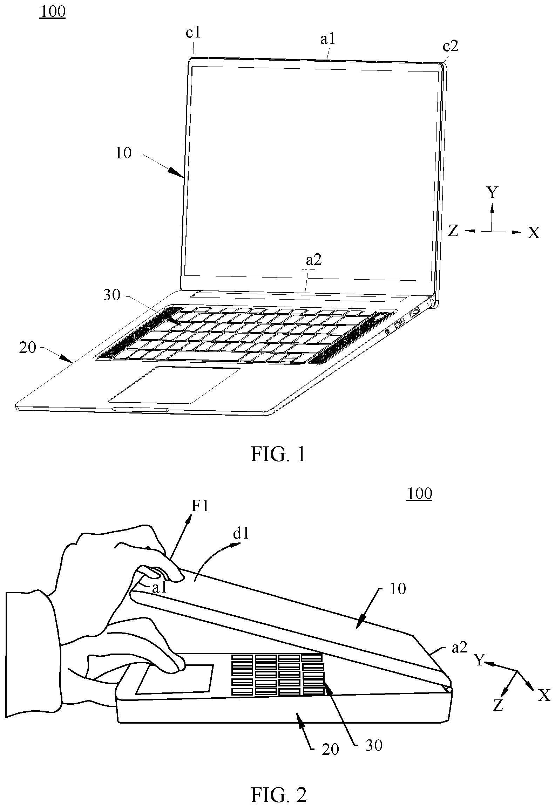

FIG. 1 is a three-dimensional diagram of an electronic device 100 according to some embodiments of this application. In this embodiment and the following embodiments, an example in which the electronic device 100 is a notebook computer is used for description. The electronic device 100 includes a display 10, a host 20, and a keyboard 30.

It can be understood that FIG. 1 shows merely some example components included in the electronic device 100. Actual shapes, actual sizes, actual positions, and actual structures of the components are not limited by FIG. 1. In some other embodiments, when the electronic device is a tablet computer, a laptop computer, or a personal digital assistant, the electronic device 100 may not include at least one of the host 20 and the keyboard 30.

The display 10 is configured to display an image, a video, and the like. The keyboard 30 is configured to input instructions or data. The keyboard 30 is disposed on the host 20. The host 20 is used as a control center of the electronic device 100, and is configured to implement functions such as data storage, operation, control, and signal conversion. The host 20 is rotatably connected to the display 10. The electronic device 100 can switch between an open state and a closed state. When the electronic device 100 is in the open state, refer to FIG. 1. The electronic device 100 shown in FIG. 1 is in the open state. The display 10 can be opened by an angle relative to the host 20. The angle may be greater than 0° and less than 180°. When the electronic device 100 is in the closed state, the display 10 covers a surface of the keyboard 30 of the host 20.

The following mainly describes the display 10.

Still refer to FIG. 1. The display 10 is approximately in a rectangular shape. Based on this, to facilitate descriptions of the following embodiments, an XYZ coordinate system is established for the display 10 described in this embodiment and the following embodiments. A length direction of the display 10 is defined as an X-axis direction, a width direction of the display 10 is defined as a Y-axis direction, and a thickness direction of the display 10 is defined as a Z-axis direction. It can be understood that the coordinate system of the display 10 may be set flexibly based on an actual requirement. This is not specifically limited herein. In some other embodiments, a shape of the display 10 may alternatively be square flat, circular flat, elliptical flat, or the like.

Based on the foregoing description, with development of technologies, users have increasingly high requirements on a screen-to-body ratio of the display 10, and a black edge width at an edge of a display interface of the display 10 is also required to be smaller. The black edge width at the edge of the display interface is usually affected by a housing assembly in the display 10.

According to another aspect, still refer to FIG. 1. For two ends of the display 10 along the Y-axis direction (namely, an end a1 and an end a2 in FIG. 1), the end a1 is cantilevered, and the end a2 is rotatably connected to the host 20. The housing assembly in the display 10 needs to ensure anti-bending and anti-torsional strength. Otherwise, when the electronic device 100 falls in an open process or in the open state, an external force is applied to the end a1, easily causing torsion of the housing assembly of the display 10. The torsion forces the screen to deform, resulting in a black screen, light leakage, and even screen breakage. Especially when an external force is applied to corner portions (namely, a portion c1 and a portion c2 in FIG. 1) at two ends of the end a1 along the X-axis direction, pressure acting on the housing assembly at the corner portions is relatively high, there is a relatively high possibility of torsion of the housing assembly at the corner portions, and there is also a relatively high possibility of black screen, light leakage, and even screen breakage of the screen at the corner portions.

The following describes the foregoing technical problem in detail with reference to two external force scenarios of the electronic device 100.

FIG. 2 is a diagram of a force applied to the electronic device 100 shown in FIG. 1 in an open process. A user holds the host 20 with the left hand, and holds the end a1 of the display 10 with the right hand and applies a force F1 in a direction far away from the host 20 to rotate the display 10 relative to the host 20 to an open position. If the anti-bending and anti-torsional strength of the housing assembly in the display 10 is not enough, under resistance of a rotating shaft between the display 10 and the host 20, relative to the end a2, the end a1 of the display 10 is easily bent towards a side facing away from the host 20 along a direction d1, and the screen easily undergoes a black screen, light leakage, and even screen breakage.

Correspondingly, in a process of closing the electronic device 100, the user holds the host 20 with the left hand, and holds the end a1 of the display 10 and applies a force to the host 20 to rotate the display 10 relative to the host 20 to a closed position. If the anti-bending and anti-torsional strength of the housing assembly in the display 10 is not enough, under resistance of a rotating shaft between the display 10 and the host 20, relative to the end a2, the end a1 of the display 10 is easily bent towards a side facing the host 20, and the screen also easily undergoes a black screen, light leakage, and even screen breakage.

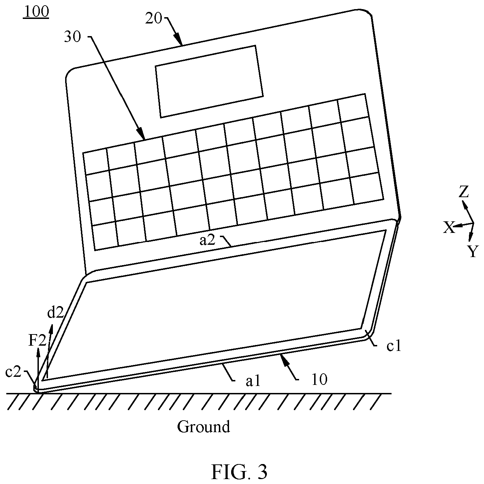

FIG. 3 is a diagram of a force applied to the electronic device 100 shown in FIG. 1 when the electronic device falls onto ground in an open state. At the moment of landing, the corner portion c2 at the end a1 of the display 10 is subjected to an impact force F2. If the anti-bending and anti-torsional strength at the corner portion c2 of the housing assembly in the display 10 is not enough, subjected to the impact force F2, the housing assembly and the screen at the corner portion c2 easily undergo warping in a direction d2, and the screen at the corner portion c2 easily undergoes a black screen, light leakage, and even screen breakage.

Based on the foregoing description, to ensure the anti-bending and anti-torsional performance of the display 10, the housing assembly of the display 10 may include a housing and support members. The support members are disposed at four edge portions of the housing. The screen of the display 10 is supported and fastened to the support members on the four edges by using a light-transmitting cover plate. The support members reinforce four edge portions of the housing, so that the housing can keep in a rectangular shape, improving the anti-bending and anti-torsional strength of the housing assembly. However, limited by the support members, it is difficult to further reduce the black edge width of the screen, making it difficult to further increase the screen-to-body ratio of the display 10. Therefore, it can be learned that the current display 10 cannot have a large screen-to-body ratio and stronger anti-bending and anti-torsional performance.

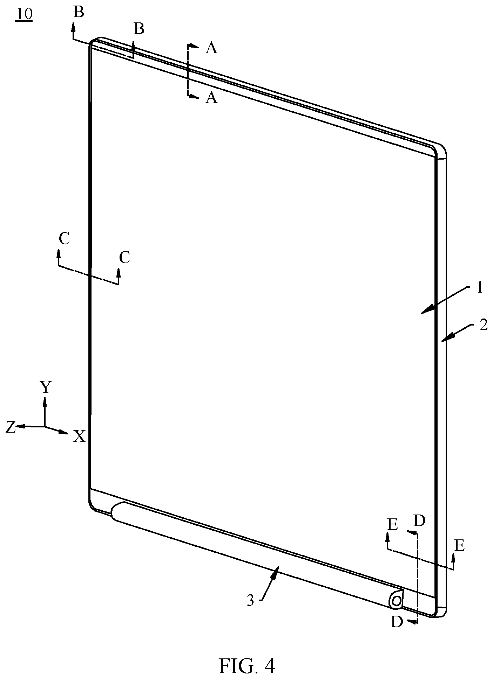

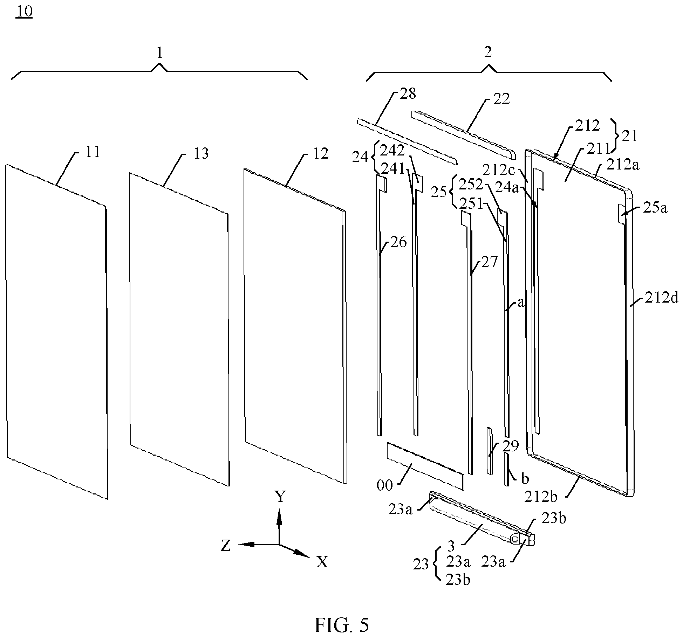

To increase the screen-to-body ratio of the display 10 and ensure the anti-bending and anti-torsional performance of the display 10, refer to FIG. 4 and FIG. 5. FIG. 4 is a three-dimensional diagram of a display 10 according to some embodiments of this application. FIG. 5 is an exploded view of the display 10 shown in FIG. 4. The display 10 may be applied to the foregoing electronic device 100. The display 10 includes a screen 1 and a housing assembly 2.

It can be learned that FIG. 4 and FIG. 5 show merely some example components included in the display 10. Actual shapes, actual sizes, actual positions, and actual structures of the components are not limited by FIG. 4 and FIG. 5. In some other embodiments, in addition to the screen 1 and the housing assembly 2, the display 10 may further include a camera and the like. This is not specifically limited in this application.

The screen 1 is configured to display an image, a video, and the like. Refer to FIG. 5, which is very important. The screen 1 includes a light-transmitting cover plate 11 and a display module 12 which are stacked. The light-transmitting cover plate 11 is adhered to the display module 12 via an adhesive layer 13.

The light-transmitting cover plate 11 is mainly configured to protect the display module 12 and prevent dust. In addition, the light-transmitting cover plate 11 also serves as a support "skeleton" of the screen 1, and is configured to connect to the housing assembly 2 to support and fasten the screen 1 to the housing assembly 2. A material of the light-transmitting cover plate 11 includes but is not limited to glass and plastic. In some other embodiments, the screen 1 may alternatively not be provided with the light-transmitting cover plate 11.

The display module 12 includes a display panel and a back light unit. In the display module 12, the display panel and the back light unit may be fastened together via a structure such as an adhesive layer (not shown in the figure), or may be independent of each other. When the display panel and the back light unit are independent of each other, the display panel may be fastened to the light-transmitting cover plate 11 via the adhesive layer 13, and the back light unit may be fastened to the housing assembly 2. In this embodiment and the following embodiments, an example in which the display panel and the back light unit are fastened together via the adhesive layer is used for description, but this shall not be considered as a special limitation to this application.

The display panel is a core component configured to implement a display function in the display module 12.

In some embodiments, the display panel may be a liquid crystal display (liquid crystal display, LCD) panel. The back light unit is located on a side of the display panel facing away from the light-transmitting cover plate 11, and is stacked with the display panel. The back light unit is configured to provide a light source for the display panel, so that each sub pixel (sub pixel) in the liquid crystal display panel can emit light to display an image.

The sub pixel is a minimum imaging unit of the display panel. A plurality of subsequently neighboring sub pixels emitting different light may form one pixel (pixel). For example, a red (red, R) sub pixel, a green (green, G) sub pixel, and a blue (blue, B) sub pixel that are subsequently neighboring to each other form one pixel. In this case, a pixel display color may be adjusted by adjusting proportions of R, G, and B light in different pixels.

In the foregoing embodiment, the back light unit may be an edge-type back light unit or a direct-type back light unit. This is not limited herein.

In some other embodiments, the foregoing display panel may alternatively be a self-luminous display panel. The self-luminous display panel includes but is not limited to an organic light-emitting diode (organic light-emitting diode, OLED) display panel, an active-matrix organic light-emitting diode (active-matrix organic light-emitting diode, AMOLED) display panel, a mini organic light-emitting diode (mini organic light-emitting diode) display panel, an organic light-emitting diode (micro organic light-emitting diode) display panel, a micro organic light-emitting diode (micro organic light-emitting diode) display panel, or a quantum dot light-emitting diode (quantum dot light-emitting diode, QLED) display panel. The self-luminous display panel can emit light autonomously without a backlight source. Therefore, the display module 12 may alternatively not be provided with the back light unit, facilitating thinning of the display module 12 and the screen 1.

It can be learned that in addition to the light-transmitting cover plate 11 and the display module 12, the screen 1 may further include a fingerprint recognition module, a touch panel, and the like. This is not specifically limited in this application.

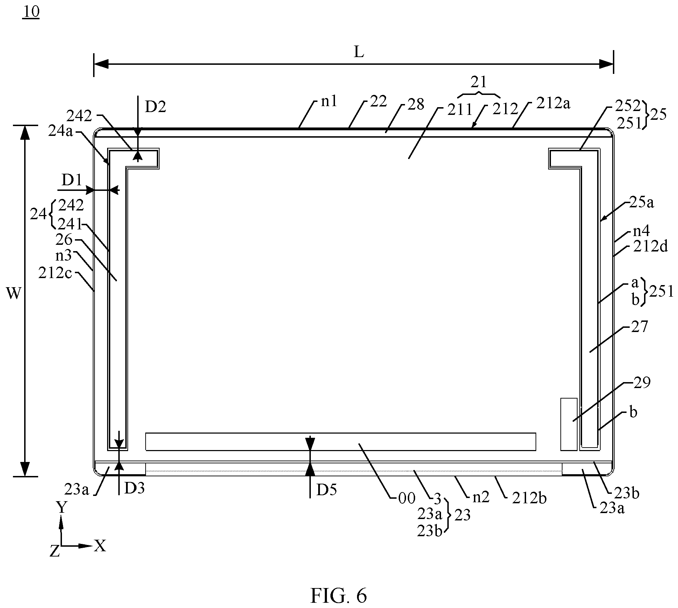

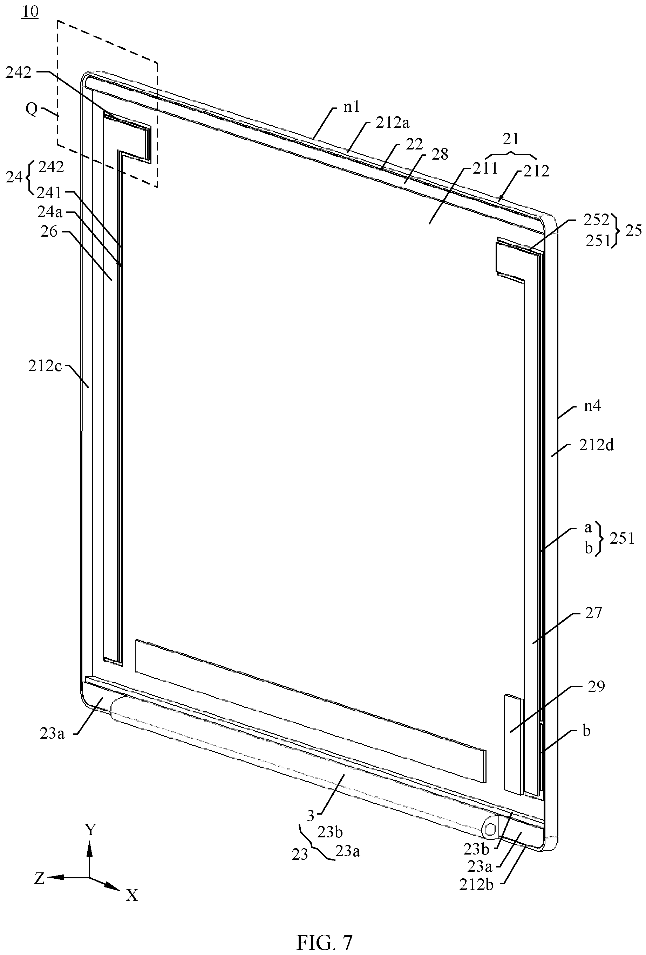

The housing assembly 2 is configured to support and protect the screen 1. Refer to FIG. 5, which is very important. The housing assembly 2 includes a housing 21, a first support member 22, a second support member 23, a first reinforcing member 24, a second reinforcing member 25, a first adhesive layer 26, a second adhesive layer 27, a third adhesive layer 28, a fourth adhesive layer 29, and a fifth adhesive layer 00. FIG. 6 is a front view of an assembly structure of a housing assembly 2 in the display 10 shown in FIG. 5. FIG. 7 is a three-dimensional diagram of the housing assembly 2 shown in FIG. 6.

It can be learned that FIG. 5 to FIG. 7 show merely some example components included in the housing assembly 2. Actual shapes, actual sizes, actual positions, and actual structures of the components are not limited by FIG. 5 to FIG. 7. In some other embodiments, the housing assembly 2 may alternatively not include at least one of the second reinforcing member 25, the first adhesive layer 26, the second adhesive layer 27, the third adhesive layer 28, the fourth adhesive layer 29, and the fifth adhesive layer 00; or in addition to the foregoing structures, the housing assembly 2 further includes another structure. This is not specifically limited herein.

The housing 21 is a frame body in the housing assembly 2. A material of the housing 21 includes one or more of aluminum, magnesium, iron, copper, and titanium elements; or one or more of plastic and a carbon fiber composite material. The plastic may be polycarbonate (polycarbonate, PC), PC + glass fiber, or ABS plastic (acrylonitrile butadiene styrene plastic). The carbon fiber composite material is a material formed by a composite of resin, metal, ceramic, carbon, and carbon fiber that is used as a reinforcing material. Refer to FIG. 5, which is very important. The housing 21 includes a bottom plate 211 and a side frame 212. The bottom plate 211 and the side frame 212 may be integrally formed, or may be manufactured separately and assembled. In this embodiment and the following embodiments, an example in which the bottom plate 211 and the side frame 212 are integrally formed is used for description. Based on this, a molding process of the housing 21 includes one or more of processes such as stamping, computer number control (computer number control, CNC), die-casting, and injection molding.

Refer to FIG. 5. The bottom plate 211 is configured to protect the screen 1 on a back side of the screen 1. The screen 1 includes a display surface. The display surface is a surface of the light-transmitting cover plate 11 of the screen 1 facing away from the display module 12. A user can view, through the display surface, an image or a video displayed on the screen 1. Based on this, the back side of the screen 1 is a side of the screen 1 facing away from the display surface. The bottom plate 211 is approximately in a shape of a flat plate. In some other embodiments, the bottom plate 211 may alternatively be in a shape of an arc plate overally; or a middle portion is in a shape of a flat plate, and an edge portion is in a shape of an arc plate. This is not specifically limited in this application.

Refer to FIG. 6, which is very important. The bottom plate 211 includes a first edge n1 and a second edge n2 that are opposite to each other and a third edge n3 and a fourth edge n4 that are opposite to each other. The third edge n3 and the fourth edge n4 are both connected between the first edge n1 and the second edge n2.

It should be noted that the bottom plate 211 is in a shape of a plate. Relative to a length and a width on an XY flat surface, a thickness of the bottom plate 211 in the Z-axis direction is very small. Therefore, in this embodiment of this application, the bottom plate 211 is equivalent to a flat surface structure with a thickness of 0 along the Z-axis direction to define the first edge n1, the second edge n2, the third edge n3, and the fourth edge n4 that are described above. Specifically, the first edge n1, the second edge n2, the third edge n3, and the fourth edge n4 are four sides of the equivalent flat surface structure. More specifically, the first edge n1 and the second edge n2 are two opposite sides of the equivalent flat surface structure, and the third edge n3 and the fourth edge n4 are other two opposite sides of the equivalent flat surface structure. The first edge n1, the second edge n2, the third edge n3, and the fourth edge n4 are approximately in a linear shape extending along a circumferential direction of the flat surface structure, having a length direction and an extension direction. Related descriptions of the first edge n1, the second edge n2, the third edge n3, and the fourth edge n4 in the following may all be understood based on this equivalent manner. Details are not described in the following descriptions again.

In some embodiments, refer to FIG. 6. Lengths of the first edge n1 and the second edge n2 are greater than lengths of the third edge n3 and the fourth edge n4. That is, a size of the housing assembly 2 in the X-axis direction is greater than a size of the housing assembly 2 in the Y-axis direction. In some other embodiments, lengths of the first edge n1 and the second edge n2 may alternatively be less than or equal to lengths of the third edge n3 and the fourth edge n4. That is, a size of the housing assembly 2 in the X-axis direction is less than or equal to a size of the housing assembly 2 in the Y-axis direction.

Refer to FIG. 5. The side frame 212 is configured to protect the screen 1 on periphery of the screen 1. The side frame 212 is disposed to wrap an edge of the bottom plate 211. Specifically, the side frame 212 may be disposed to wrap all edges of the bottom plate 211, or may be disposed to wrap some edges of the bottom plate 211. This is not specifically limited herein. In the embodiments shown in FIG. 5 to FIG. 7, the side frame 212 is disposed to wrap all the edges of the bottom plate 211. Specifically, the side frame 212 includes a first side plate 212a and a second side plate 212b that are opposite to each other and a third side plate 212c and a fourth side plate 212d that are opposite to each other. The first side plate 212a is connected to the first edge n1 of the bottom plate 211. The second side plate 212b is connected to the second edge n2 of the bottom plate 211. The third side plate 212c is connected to the third edge n3 of the bottom plate 211. The fourth side plate 212d is connected to the fourth edge n4 of the bottom plate 211. When the side frame 212 is disposed to wrap some edges of the bottom plate 211, the side frame 212 may not be provided with one or more of the first side plate 212a, the second side plate 212b, the third side plate 212c, and the fourth side plate 212d.

In some embodiments, along a thickness direction of the display (that is, the Z-axis direction), a projection of the side frame 212 on the bottom plate 211 does not overlap a projection of the screen 1 on the bottom plate 211. Specifically, along the thickness direction of the display, none of projections of the first side plate 212a, the second side plate 212b, the third side plate 212c, and the fourth side plate 212d on the bottom plate 211 overlaps the projection of the screen 1 on the bottom plate 211. In this way, the side frame 212 does not need to support the screen 1, and a wall thickness of the side frame 212 can be made thinner, helping reduce material costs of the housing 21 and increase the screen-to-body ratio of the display 10.

In some embodiments, in the side frame 212, wall thicknesses of the first side plate 212a, the second side plate 212b, the third side plate 212c, and the fourth side plate 212d may be less than or equal to 2% of a width W of the housing 21 in the Y-axis direction. Specifically, the wall thicknesses of the first side plate 212a, the second side plate 212b, the third side plate 212c, and the fourth side plate 212d may be 2%, 1.8%, 1.6%, 1.5%, 1.4%, 1.3%, 1.2%, 1.1%, 1%, 0.9%, 0.8%, 0.7%, or 0.5% of the width W of the housing 21 in the Y-axis direction. In this way, each wall thickness of the side frame 212 is relatively thin, helping increase the screen-to-body ratio of the display 10.

The bottom plate 211 and the side frame 212 form an accommodation space. The accommodation space is configured to accommodate the screen 1.

Refer to FIG. 6 and FIG. 7, which are very important. The first support member 22, the second support member 23, the first reinforcing member 24, and the second reinforcing member 25 are disposed on an inner surface of the bottom plate 211. In addition, the first support member 22, the second support member 23, the first reinforcing member 24, and the second reinforcing member 25 are located on an inner side of the side frame 212. The "inner surface of the bottom plate 211" is a surface of the bottom plate 211 facing the accommodation space. The "inner side of the side frame 212" is a side of the side frame 212 facing the accommodation space.

The first support member 22, the second support member 23, the first reinforcing member 24, and the second reinforcing member 25 are configured to improve mechanical strength of the housing assembly 2 at the four edges of the bottom plate 211, to ensure the anti-bending and anti-torsional performance of the housing assembly 2, so as to effectively protect the screen 1, and avoid a black screen, light leakage, and even screen breakage of the screen 1 when the electronic device 100 falls in the open process or the open state. The first support member 22, the second support member 23, the first reinforcing member 24, and the second reinforcing member 25 may be an integral structure, or may be formed by splicing a plurality of parts. This is not specifically limited herein.

Specifically, refer to FIG. 6 and FIG. 7. The first support member 22 is located at the first edge n1 and extends along the first edge n1. That the first support member 22 is located at the first edge n1 means that the first support member 22 is relatively close to the first edge n1. Specifically, when the first edge n1 is provided with the first side plate 212a, a distance between the first support member 22 and the first side plate 212a in the Y-axis direction is less than or equal to 1 millimeter (mm); and when the first edge n1 is not provided with the first side plate 212a, the distance between the first support member 22 and the first edge n1 in the Y-axis direction is less than or equal to 1 mm. In the two cases, it may be considered that the first support member 22 is located at the first edge n1. The first support member 22 is configured to improve the mechanical strength of the housing assembly 2 at the first edge n1.

A distance between the first support member 22 and the first side plate 212a in the Y-axis direction when the first edge n1 is provided with the first side plate 212a and a distance between the first support member 22 and the first edge n1 in the Y-axis direction when the first edge n1 is not provided with the first side plate 212a may be specifically 1 mm, 0.9 mm, 0.8 mm, 0.6 mm, 0.5 mm, 0.4 mm, 0.3 mm, 0.2 mm, 0.1 mm, or the like. This is not specifically limited herein.

The second support member 23 is located at the second edge n2 and extends along the second edge n2. That the second support member 23 is located at the second edge n2 means that the second support member 23 is relatively close to the second edge n2. Specifically, when the second edge n2 is provided with the second side plate 212b, a distance between the second support member 23 and the second side plate 212b in the Y-axis direction is less than or equal to 1 mm; and when the second edge n2 is not provided with the second side plate 212b, a distance between the second support member 23 and the second edge n2 in the Y-axis direction is less than or equal to 1 mm. In the two cases, it may be considered that the second support member 23 is located at the second edge n2. The second support member 23 is configured to improve the mechanical strength of the housing assembly 2 at the second edge n2.

A distance between the second support member 23 and the second side plate 212b in the Y-axis direction when the second edge n2 is provided with the second side plate 212b and a distance between the second support member 23 and the second edge n2 in the Y-axis direction when the second edge n2 is not provided with the second side plate 212b may be specifically 1 mm, 0.9 mm, 0.8 mm, 0.6 mm, 0.5 mm, 0.4 mm, 0.3 mm, 0.2 mm, 0.1 mm, or the like. This is not specifically limited herein.

The first reinforcing member 24 is located between the first support member 22 and the second support member 23. The first reinforcing member 24 includes a first extension portion 241. The first extension portion 241 is located at the third edge n3 and extends along the third edge n3. That the first extension portion 241 is located at the third edge n3 means that the first extension portion 241 is relatively close to the third edge n3. Specifically, when the third edge n3 is provided with the third side plate 212c, a distance D1 between the first extension portion 241 and the third side plate 212c in the X-axis direction is less than or equal to 8% of a length L of the housing 21 in the X-axis direction; and when the third edge n3 is not provided with the third side plate 212c, a distance between the first extension portion 241 and the third edge n3 in the X-axis direction is less than or equal to 8% of the length L of the housing 21 in the X-axis direction. In the two cases, it may be considered that the first extension portion 241 is located at the third edge n3. The first extension portion 241 of the first reinforcing member 24 is configured to improve the mechanical strength of the housing assembly 2 at the third edge n3.

The distance D1 between the first extension portion 241 and the third side plate 212c in the X-axis direction when the third edge n3 is provided with the third side plate 212c and the distance between the first extension portion 241 and the third edge n3 in the X-axis direction when the third edge n3 is not provided with the third side plate 212c may be 8%, 7%, 6%, 5%, 4%, 3%, or the like of the length L of the housing 21 in the X-axis direction. This is not specifically limited herein.

Based on the foregoing description, optionally, still refer to FIG. 6 and FIG. 7. The first reinforcing member 24 further includes a second extension portion 242. The second extension portion 241 is connected to an end of the first extension portion 241 facing the first edge n1 and extends along the first edge n1. The "end of the first extension portion 241 facing the first edge n1" may be understood as an end of the first extension portion 241 closest to the first edge n1. A similar description in the following shall be understood in the same way. Details are not described in the following again. In this way, the first reinforcing member 24 not only can improve the mechanical strength of the housing assembly 2 at the third edge n3, but also can improve the mechanical strength of the housing assembly 2 at a corner portion between the third edge n3 and the first edge n1, avoiding warping of the housing assembly and the screen at the corner portion caused when the electronic device 100 falls in an open state, and avoiding a black screen, light leakage, and even screen breakage of the screen at the corner portion.

In the foregoing embodiments, a connection part between the second extension portion 241 and the first extension portion 241 may be located at a middle portion of the second extension portion 241, or may be located at an end portion of the second extension portion 241 facing the third edge n3, or may be located at an end portion of the second extension portion 241 far away from the third edge n3. FIG. 6 and FIG. 7 are described by using an example in which the connection part is located at the end portion of the second extension portion 241 facing the third edge n3, but this shall not be considered as a special limitation to this application.

In some other embodiments, the first reinforcing member 24 may alternatively not be provided with the second extension portion 242.

The second reinforcing member 25 is located between the first support member 22 and the second support member 23. The second reinforcing member 25 includes a third extension portion 251. The third extension portion 251 is located at the fourth edge n4 and extends along the fourth edge n4. That the third extension portion 251 is located at the fourth edge n4 means that the third extension portion 251 is relatively close to the fourth edge n4. Specifically, when the fourth edge n4 is provided with the fourth side plate 212d, a distance between the third extension portion 251 and the fourth side plate 212d in the X-axis direction is less than or equal to 8% of the length L of the housing 21 in the X-axis direction; and when the fourth edge n4 is not provided with the fourth side plate 212d, a distance between the third extension portion 251 and the fourth edge n4 in the X-axis direction is less than or equal to 8% of the length L of the housing 21 in the X-axis direction. In the two cases, it may be considered that the third extension portion 251 is located at the fourth edge n4. The third extension portion 251 of the second reinforcing member 25 is configured to improve the mechanical strength of the housing assembly 2 at the fourth edge n4.

The distance between the third extension portion 251 and the fourth side plate 212d in the X-axis direction when the fourth edge n4 is provided with the fourth side plate 212d and the distance between the third extension portion 251 and the fourth edge n4 in the X-axis direction when the fourth edge n4 is not provided with the fourth side plate 212d may be specifically 8%, 7%, 6%, 5%, 4%, 3%, or the like of the length L of the housing 21 in the X-axis direction. This is not specifically limited herein.

Based on the foregoing description, in some embodiments, still refer to FIG. 6 and FIG. 7. The second reinforcing member 25 further includes a fourth extension portion 252. The fourth extension portion 252 is connected to an end of the third extension portion 251 facing the first edge n1 and extends along the first edge n1. In this way, the second reinforcing member 25 not only can improve the mechanical strength of the housing assembly 2 at the fourth edge n4, but also can improve the mechanical strength of the housing assembly 2 at a corner portion between the fourth edge n4 and the first edge n1, avoiding warping of the housing assembly and the screen at the corner portion caused when the electronic device 100 falls in an open state, and avoiding a black screen, light leakage, and even screen breakage of the screen at the corner portion.

In the foregoing embodiments, a connection part between the fourth extension portion 252 and the third extension portion 251 may be located at a middle portion of the fourth extension portion 252, or may be located at an end portion of the fourth extension portion 252 facing the fourth edge n4, or may be located at an end portion of the fourth extension portion 252 far away from the fourth edge n4. FIG. 6 and FIG. 7 are described by using an example in which the connection part is located at the end portion of the fourth extension portion 252 facing the fourth edge n4, but this shall not be considered as a special limitation to this application.

In some other embodiments, the second reinforcing member 25 may alternatively not be provided with the fourth extension portion 242.

It should be noted that when the display 10 is applied to another electronic device 100 such as a desktop computer or a tablet computer, in a process in which the display 10 falls or in a transportation process, a corner portion of the housing assembly 2 located between the second edge n2 and the third edge n3 and a corner portion between the second edge n2 and the fourth edge n4 may collide with the ground or another object.

Based on the foregoing description, to protect the screen at the corner portion between the second edge n2 and the third edge n3 and the corner portion between the second edge n2 and the fourth edge n4, in some embodiments, the first reinforcing member 24 may further include a fifth extension portion (not shown in the figure). The fifth extension portion is connected to an end of the first extension portion 241 facing the second edge n2 and extends along the second edge n2. The second reinforcing member 25 may further include a sixth extension portion (not shown in the figure). The sixth extension portion is connected to an end of the third extension portion 251 facing the second edge n2 and extends along the second edge n2.

In this way, the first reinforcing member 24 not only can improve the mechanical strength of the housing assembly 2 at the third edge n3 and the corner portion between the third edge n3 and the first edge n1, but also can improve the mechanical strength of the housing assembly 2 at a corner portion between the third edge n3 and the second edge n2, In addition, the second reinforcing member 25 not only can improve the mechanical strength of the housing assembly 2 at the fourth edge n4 and the corner portion between the fourth edge n4 and the first edge n1, but also can improve the mechanical strength of the housing assembly 2 at the corner portion between the second edge n2 and the fourth edge n4. In this way, warping of the screen and the housing assembly at the corner portion between the second edge n2 and the third edge n3 and the corner portion between the second edge n2 and the fourth edge n4 can be avoided, and a black screen, light leakage, and even screen breakage of the screen at the two corner portions can be avoided.

In some embodiments, refer to FIG. 5 to FIG. 7. The second support member 23 includes a rotating shaft, a rotating shaft cover 3, decorative members 23a, and a supporting body 23b.

The rotating shaft is hidden in the rotating shaft cover 3, and therefore is not shown in the figure. The display 10 is configured to rotatably connect to the host 20 via the rotating shaft. The decorative members 23a are located at two ends of the rotating shaft cover 3, having a decoration purpose. In some other embodiments, the decorative members 23a may alternatively located at one end of the rotating shaft cover 3. The supporting body 23b is configured to support the screen 1. The supporting body 23b is located on sides of the rotating shaft cover 3 and the decorative members 23a far away from the second edge n2. In some other embodiments, the supporting body 23b may alternatively be disposed on a side of the decorative members 23a far away from the second edge n2, and a side of the rotating shaft cover 3 far away from the second edge n2 is not provided with the supporting body 23b, so that an electrical connection structure is conveniently disposed at a position of the rotating shaft cover 3 far away from the second edge n2. The electrical connection structure is configured to connect to the host 20. In some embodiments, the rotating shaft cover 3, the decorative members 23a, and the supporting body 23b may be integrally formed. In some other embodiments, the rotating shaft cover 3, the decorative members 23a, and the supporting body 23b may be manufactured separately, and are assembled on the housing 21. This is not specifically limited herein.

In some other embodiments, when the display is applied to another electronic device, for example, a device such as a desktop computer or a tablet computer, the second support member 23 may alternatively not include the rotating shaft, the rotating shaft cover 3, and the decorative members 23a.

A material of the first support member 22, the second support member 23, the first reinforcing member 24, and the second reinforcing member 25 includes one or more of aluminum, magnesium, iron, copper, and titanium elements; or one or more of plastic and a carbon fiber composite material. The plastic may be polycarbonate (polycarbonate, PC), PC + glass fiber, or ABS plastic (acrylonitrile butadiene styrene plastic). The carbon fiber composite material is a material formed by a composite of resin, metal, ceramic, carbon, and carbon fiber that is used as a reinforcing material.

In some embodiments, the first support member 22, the second support member 23, the first reinforcing member 24, and the second reinforcing member 25 may be disposed on the inner surface of the bottom plate 211 in an adhesive, welding, or another manner. In this way, the first support member 22, the second support member 23, the first reinforcing member 24, the second reinforcing member 25, and the housing 21 may be manufactured separately, assembled, and connected. The housing 21 may be processed by using a material such as aluminum alloy, magnesium alloy, or plastic that is convenient to form and has lower costs. The first support member 22, the second support member 23, the first reinforcing member 24, and the second reinforcing member 25 may be manufactured by using a material with better stiffness such as iron, iron alloy, titanium, or titanium alloy, to consider a difficulty in forming the housing 21 and the mechanical strength of the housing assembly 2 at four edges of the bottom plate 211, so as to ensure the anti-bending and anti-torsional strength.

In the foregoing embodiment, optionally, material stiffness of the first support member 22, the second support member 23, the first reinforcing member 24, and the second reinforcing member 25 is greater than material stiffness of the housing 21. "Material stiffness" includes bending stiffness and torsional stiffness. That "material stiffness of the first support member 22, the second support member 23, the first reinforcing member 24, and the second reinforcing member 25 is greater than material stiffness of the housing 21" means that bending stiffness of the first support member 22, the second support member 23, the first reinforcing member 24, and the second reinforcing member 25 is bending stiffness of greater than the housing 21, and torsional stiffness of the first support member 22, the second support member 23, the first reinforcing member 24, and the second reinforcing member 25 is greater than torsional stiffness of the housing 21. In this way, the anti-bending and anti-torsional strength of the housing assembly 2 can be effectively ensured. In some other embodiments, the material stiffness of the first support member 22, the second support member 23, the first reinforcing member 24, and the second reinforcing member 25 may be less than or equal to the material stiffness of the housing 21. This is not specifically limited herein.

In some other embodiments, the material of the first support member 22, the second support member 23, the first reinforcing member 24, and the second reinforcing member 25 may be the same as the material of the housing 21; and the first support member 22, the second support member 23, the first reinforcing member 24, the second reinforcing member 25, and the housing 21 are integrally formed. Specifically, the "integrally formed" process includes one or more of processes such as stamping, CNC, die-casting, and injection molding. In a special case of this embodiment, the first support member 22 is connected to and integrally formed with the first side plate 212a, the second support member 23 is connected to and integrally formed with the second side plate 212b, the first extension portion 241 of the first reinforcing member 24 is connected to and integrally formed with the third side plate 212c, and the third extension portion 251 of the second reinforcing member 25 is connected to and integrally formed with the fourth side plate 212d. In this way, a molded surface of the housing assembly 2 is simple, and is easy to manufacture integrally.

The first support member 22, the second support member 23, the first reinforcing member 24, and the second reinforcing member 25 each may be in a shape of a strip, stick, plate, or sheet. In some embodiments, refer to FIG. 5. The first support member 22 and the second support member 23 are in a shape of a strip. The first reinforcing member 24 and the second reinforcing member 25 are in a shape of a sheet.

In some embodiments, still refer to FIG. 5. Thicknesses of the first support member 22 and the second support member 23 in the Z-axis direction are greater than thicknesses of the first reinforcing member 24 and the second reinforcing member 25 in the Z-axis direction. In this way, when the first support member 22, the second support member 23, the first reinforcing member 24, and the second reinforcing member 25 are manufactured by using a same material, the mechanical strength of the first support member 22 and the second support member 23 is greater than the mechanical strength of the first reinforcing member 24 and the second reinforcing member 25, to ensure consistent reinforcing effects of the first support member 22, the second support member 23, the first reinforcing member 24, and the second reinforcing member 25 on the housing assembly 2 at the four edge portions of the bottom plate 211. In some embodiments, material stiffness of the first reinforcing member 24 and the second reinforcing member 25 is greater than material stiffness of the first support member 22 and the second support member 23. "Material stiffness" includes bending stiffness and torsional stiffness. That "material stiffness of the first reinforcing member 24 and the second reinforcing member 25 is greater than material stiffness of the first support member 22 and the second support member 23" means that bending stiffness of the first reinforcing member 24 and the second reinforcing member 25 is greater than bending stiffness of the first support member 22 and the second support member 23, and torsional stiffness of the first reinforcing member 24 and the second reinforcing member 25 is greater than torsional stiffness of the first support member 22 and the second support member 23. In this way, a layout is appropriate, and costs can be reduced.

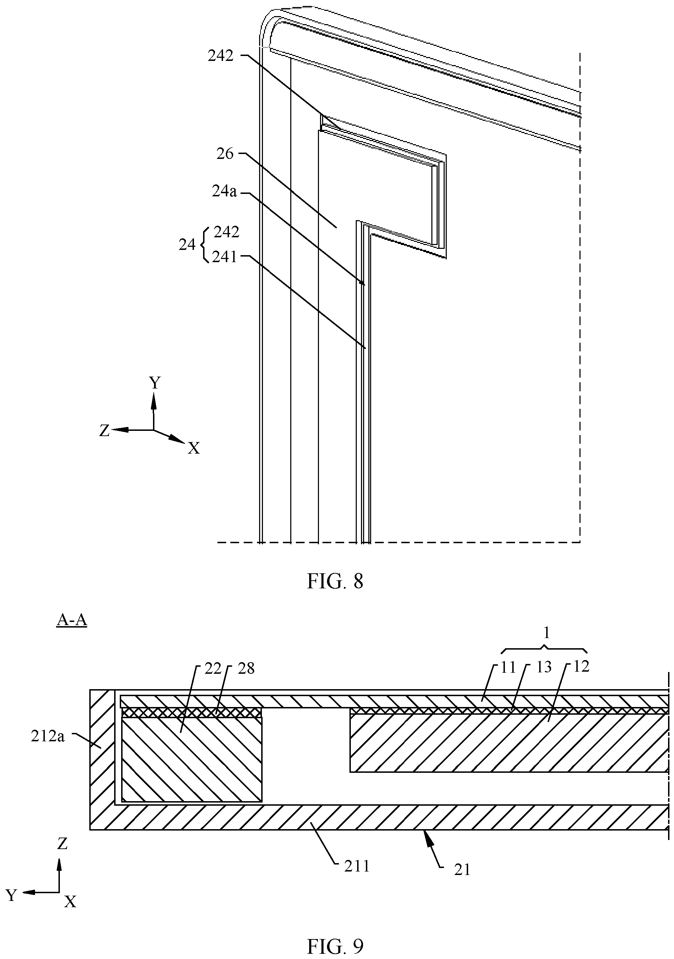

In some embodiments, refer to FIG. 5 to FIG. 7. A position that is of the inner surface of the bottom plate 211 and that corresponds to the first reinforcing member 24 is provided with a first recess 24a, and a position corresponding to the second reinforcing member 25 is provided with a second recess 25a. Depths of the first recess 24a and the second recess 25a may be 0.1 mm, 0.2 mm, 0.3 mm, 0.4 mm, 0.5 mm, or the like. This is not specifically limited herein. FIG. 8 is a partial enlarged view of an area Q of the housing assembly 2 shown in FIG. 7. The first reinforcing member 24 is disposed in the first recess 24a. The second reinforcing member 25 is disposed in the second recess 25a. In this way, on a premise that the first reinforcing member 24 and the second reinforcing member 25 protrude from the inner surface of the bottom plate 211 by a constant height, thicknesses of the first reinforcing member 24 and the second reinforcing member 25 can be made larger, having a greater reinforcing effect on the housing assembly 2 at the third edge n3, the fourth edge n4, a corner between the first edge n1 and the third edge n3, and a corner between the first edge n1 and the fourth edge n4, further improving the anti-bending and anti-torsional strength of the housing assembly 2.

The first reinforcing member 24 may be an integral structural member, or may be formed by splicing a plurality of parts. The second reinforcing member 25 may be an integral structural member, or may be formed by splicing a plurality of parts. In the embodiment shown in FIG. 5, the first reinforcing member 24 is an integral structural member. The third extension portion 251 of the second reinforcing member 25 includes a third extension portion body a and a magnet body b. The third extension portion body a and the magnet body b are arranged along the fourth edge n4, and the magnet body b is located between the third extension portion body a and the second edge n2. The magnet body b includes but is not limited to a magnet and an electromagnet. In this way, a quantity of components included in the first reinforcing member 24 can be reduced, assembly complexity can be reduced, and assembly efficiency can be improved. In addition, a part of the magnet body b forming the second reinforcing member 25 not only can have a reinforcing effect, but also can cooperate with a Hall sensor in the host 20 to detect opening and closing of a cover of the electronic device 100. Optionally, the third extension portion body a and the fourth extension portion 252 are integrally formed. In this way, a quantity of components included in the second reinforcing member 25 can be reduced, the assembly complexity can be reduced, and the assembly efficiency can be improved.

In some other embodiments, the second reinforcing member 25 may be an integral structural member. The first extension portion 241 of the first reinforcing member 24 includes a first extension portion body and a magnet body. The first extension portion body and the magnet body are arranged along the third edge, and the magnet body is located between the first extension portion body and the second edge n2. In this way, a quantity of components included in the second reinforcing member 25 can be reduced, the assembly complexity can be reduced, and the assembly efficiency can be improved. In addition, a part of the magnet body b forming the first reinforcing member 24 not only can have a reinforcing effect, but also can cooperate with a Hall sensor in the host 20 to detect opening and closing of a cover of the electronic device 100. Optionally, the first extension portion body and the second extension portion 242 are integrally formed. In this way, a quantity of components included in the first reinforcing member 24 can be reduced, the assembly complexity can be reduced, and the assembly efficiency can be improved.

Along the extension direction (namely, the Y-axis direction) of the third edge n3, the first reinforcing member 24 may be in contact with or spaced apart from the first support member 22, and the first reinforcing member 24 may be in contact with or spaced apart from the second support member 23.

In the embodiments shown in FIG. 6 and FIG. 7, along the extension direction of the third edge n3, the first reinforcing member 24 is spaced apart from the first support member 22, and the first reinforcing member 24 is spaced apart from the second support member 23. In this way, an assembly gap is kept between the first reinforcing member 24 and the first support member 22 and between the first reinforcing member 24 and the second support member 23, reducing a difficulty in assembling the first reinforcing member 24 between the first support member 22 and the second support member 23.

In the foregoing embodiment, optionally, along the extension direction of the third edge n3, a distance D2 between the first reinforcing member 24 and the first support member 22 and a distance D3 between the first reinforcing member 24 and the second support member 23 are less than or equal to 15% of the width W of the housing 21 in the Y-axis direction. In this way, the mechanical strength of the housing assembly 2 at the third edge n3 is not affected when the assembly difficulty is reduced.

Along the extension direction of the third edge n3, the distance between the first reinforcing member 24 and the first support member 22 and the distance between the first reinforcing member 24 and the second support member 23 may be specifically 15%, 14%, 13%, 12%, 11%, 10%, 9%, 8%, 7%, 6%, 5%, or the like of the width W of the housing 21 in the Y-axis direction. This is not specifically limited herein.

Similarly, along the extension direction (namely, the Y-axis direction) of the fourth edge n4, the second reinforcing member 25 may be in contact with or spaced apart from the first support member 22, and the second reinforcing member 25 may be in contact with or spaced apart from the second support member 23.

In the embodiments shown in FIG. 6 and FIG. 7, along the extension direction of the fourth edge n4, the second reinforcing member 25 is spaced apart from the first support member 22, and the second reinforcing member 25 is spaced apart from the second support member 23. In this way, an assembly gap is kept between the second reinforcing member 25 and the first support member 22 and between the second reinforcing member 25 and the second support member 23, reducing a difficulty in assembling the second reinforcing member 25 between the first support member 22 and the second support member 23.

In the foregoing embodiment, optionally, along the extension direction of the fourth edge n4, a distance between the second reinforcing member 25 and the first support member 22 and a distance between the second reinforcing member 25 and the second support member 23 are less than or equal to 15% of the width W of the housing 21 in the Y-axis direction. In this way, the mechanical strength of the housing assembly 2 at the fourth edge n4 is not affected when the assembly difficulty is reduced.

Along the extension direction of the fourth edge n4, the distance between the second reinforcing member 25 and the first support member 22 and the distance between the second reinforcing member 25 and the second support member 23 may be specifically 15%, 14%, 13%, 12%, 11%, 10%, 9%, 8%, 7%, 6%, 5%, or the like of the width W of the housing 21 in the Y-axis direction. This is not specifically limited herein.

At least a part of the first support member 22 and at least a part of the second support member 23 are configured to support and fasten the screen 1. In some embodiments, refer to FIG. 5 to FIG. 7. The entire first support member 22 and the supporting body 23b of the second support member 23 are configured to support and fasten the screen 1. Specifically, the entire first support member 22 and the supporting body 23b of the second support member 23 may support and fasten the screen 1 in a bonding or clamping manner. A specific implementation of bonding or clamping the screen 1 is described in detail by using the first support member 22 as an example.

FIG. 9 is a diagram of a cross-section structure of the display 10 shown in FIG. 4 along A-A. In this embodiment, the light-transmitting cover plate 11 of the screen 1 is fastened, by using the third adhesive layer 28, to a surface of the first support member 22 far away from the bottom plate 211. This fastening manner is convenient, the first support member 22 does not need to be grooved and is easy to process, a structure is simple, and costs are relatively low.

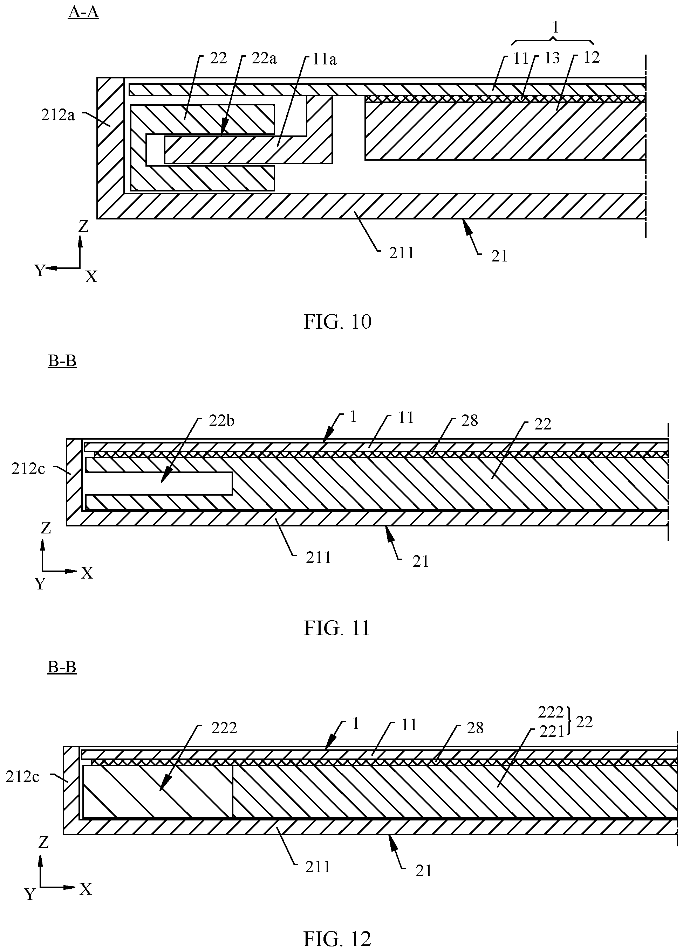

FIG. 10 is a diagram of another cross-section structure of the display 10 shown in FIG. 4 along A-A. In this embodiment, the light-transmitting cover plate 11 of the screen 1 is provided with a buckle 11a, a surface of the first support member 22 facing away from the first side plate 212a is provided with a clamping slot 22a recessed towards the first side plate 212a, and the light-transmitting cover plate 11 is buckled in the clamping slot 22a by using the buckle 11a. This fastening manner is firm, and stability is relatively high.

It should be noted that in addition to the two manners shown in FIG. 9 and FIG. 10, manners in which the first support member 22 supports and fastens the screen 1 may further include another manner. This is not specifically limited in this application. In addition, a manner in which the supporting body 23b of the second support member 23 supports and fastens the screen 1 may be the same as the manner in which the first support member 22 supports and fastens the screen 1, or may be different from the manner in which the first support member 22 supports and fastens the screen 1. When the manner in which the supporting body 23b of the second support member 23 supports and fastens the screen 1 is different from the manner in which the first support member 22 supports and fastens the screen 1, optionally, the first support member 22 may support and fasten the screen 1 in the bonding manner shown in FIG. 9, and the supporting body 23b of the second support member 23 may support and fasten the screen 1 in the clamping manner shown in FIG. 10; or the first support member 22 supports and fastens the screen 1 in the clamping manner shown in FIG. 10, and the supporting body 23b of the second support member 23 supports and fastens the screen 1 in the bonding manner shown in FIG. 9.

It can be learned that, as shown in FIG. 5 to FIG. 7, because the length of the housing assembly 2 in the X-axis direction is relatively large, in a processing or using process, two ends of the housing assembly 2 along the X-axis direction undergo warping easily towards a side facing the screen 1 or a side facing away from the screen 1 relative to the middle portion. In this way, when the screen 1 is fastened to the housing assembly 2, limited by the housing assembly 2, two ends of the screen 1 along the X-axis direction also undergo warping easily towards or away from a display side relative to the middle portion, resulting in unevenness of the screen 1 and local stress and strain of the screen 1, which easily cause a black screen or light leakage. Therefore, the two ends of the screen 1 along the X-axis direction easily undergo a black screen or light leakage. The "display side" is a side facing the display surface of the screen 1. A user can view, on the display side, an image or a video displayed on the screen 1.

To resolve the foregoing problem, FIG. 11 is a diagram of a cross-section structure of the display 10 shown in FIG. 4 along B-B. In this embodiment, at least one end portion of the first support member 22 along the length direction (namely, the X-axis direction) of the first edge n1 is provided with an elastic notch 22b. The elastic notch 22b is configured to increase elasticity of the end portion, to generate elastic compression or stretching along the Z-axis direction when the at least one end of the housing assembly 2 along the X-axis direction undergoes warping relative to the middle portion, so that the screen 1 remains flat, avoiding warping of the at least one end of the screen 1 in the X-axis direction, and avoiding a black screen or light leakage.

In some other embodiments, FIG. 12 is a diagram of another cross-section structure of the display 10 shown in FIG. 4 along B-B. In this embodiment, the first support member 22 includes a middle portion segment 221 and a first end portion segment 222 that are arranged along the length direction (namely, the X-axis direction) of the first edge n1, and the first end portion segment 222 forms an end portion of the first support member 22 along the length direction of the first edge n1. Material stiffness of the first end portion segment 222 is less than material stiffness of the middle portion segment 221. "Material stiffness" is tension and compression stiffness (tension and compression stiffness) along a direction vertical to the bottom plate 211. That "material stiffness of the first end portion segment 222 is less than material stiffness of the middle portion segment 221" means that tension and compression stiffness of the first end portion segment 222 is less than tension and compression stiffness of the middle portion segment 221. For example, the middle portion segment 221 is made of a material with larger stiffness such as aluminum alloy, magnesium alloy, iron, copper, titanium, plastic, or a carbon fiber composite material; and the first end portion segment 222 is made of a material with larger elasticity such as rubber or silicone. Base on this, the first support member 22 may further include a second end portion segment. The second end portion segment forms another end portion of the first support member 22 along the length direction of the first edge n1. Material stiffness of the second end portion segment may also be less than the material stiffness of the middle portion segment 221. The "material stiffness" should be understood in the same way as the "material stiffness" of the first end portion segment 222 and the "material stiffness" of the middle portion segment 221. Details are not described herein again. In this way, elasticity of the at least one end portion of the first support member 22 along the length direction of the first edge n1 is larger in the direction (namely, the Z-axis direction) vertical to the bottom plate 211, to generate elastic compression or stretching along the Z-axis direction when at least one end of the housing assembly 2 along the X-axis direction undergoes warping relative to a middle portion, so that the screen 1 remains flat, avoiding warping of the at least one end of the screen 1 in the X-axis direction, and avoiding a black screen or light leakage.

The first reinforcing member 24 and the second reinforcing member 25 are mainly configured to improve the mechanical strength of the housing assembly 2 at the third edge n3 and the fourth edge n4, improving the anti-bending and anti-torsional performance of the housing assembly 2.

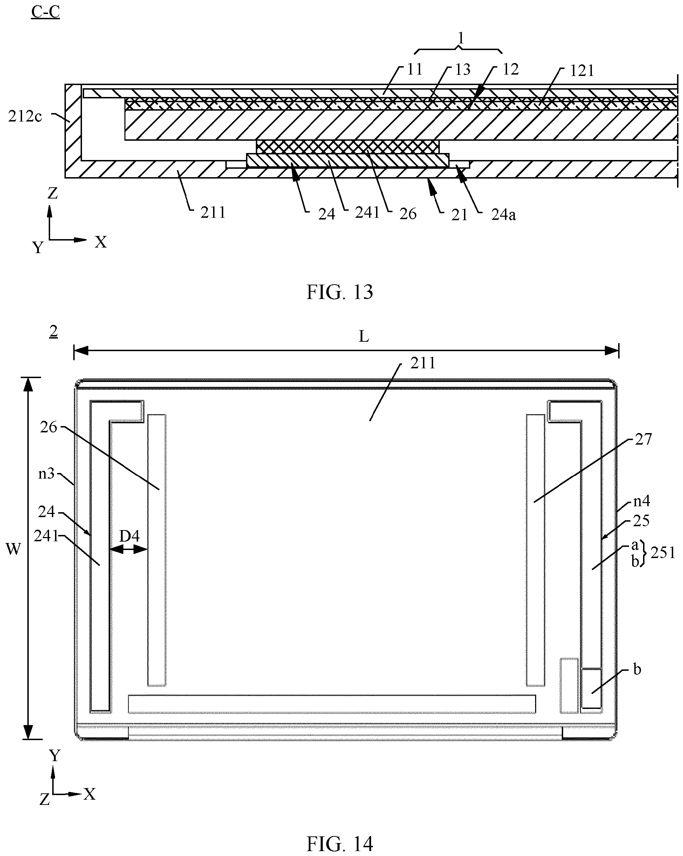

FIG. 13 is a diagram of a cross-section structure of the display 10 shown in FIG. 4 along C-C. In the first reinforcing member 24, the first extension portion 241 is located between the screen 1 and the bottom plate 211. At least a part of a projection of the first extension portion 241 on the bottom plate 211 is located within a projection of the display module 12 in the screen 1 on the bottom plate 211. Specifically, at least a part of the projection of the first extension portion 241 on the bottom plate 211 is located within a projection of the display panel 121 in the display module 12 on the bottom plate 211.

"At least a part" is a part or the whole. FIG. 13 shows an example in which an entire projection of the first extension portion 241 on the bottom plate 211 is located within the projection of the display panel 121 on the bottom plate 211.

In this way, the display panel 121 covers at least a part of an area of a surface of the first extension portion 241 facing away from the bottom plate 211, helping increase the screen-to-body ratio of the screen 1 at the third edge n3. Based on this, when the entire projection of the first extension portion 241 on the bottom plate 211 is located within the projection of the display panel 121 on the bottom plate 211, the display panel 121 covers an entire area of the surface of the first extension portion 241 far away from the bottom plate 211, helping further increase the screen-to-body ratio of the screen 1 at the third edge n3.

Based on the foregoing description, the second extension portion 242 is also located between the screen 1 and the bottom plate 211.

Correspondingly, in the second reinforcing member 25, the third extension portion 251 is located between the screen 1 and the bottom plate 211, and at least a part of a projection of the third extension portion 251 on the bottom plate 211 is located within the projection of the display panel 121 in the screen 1 on the bottom plate 211.

In this way, the display panel 121 covers at least a part of an area of a surface of the third extension portion 251 facing away from the bottom plate 211, helping increase the screen-to-body ratio of the screen 1 at the fourth edge n4. Based on this, optionally, the entire projection of the third extension portion 251 on the bottom plate 211 is located within the projection of the display panel 121 on the bottom plate 211, and the display panel 121 covers an entire area of the surface of the third extension portion 251 far away from the bottom plate 211, helping further increase the screen-to-body ratio of the screen 1 at the fourth edge n4.

Based on the foregoing description, the fourth extension portion 252 is also located between the screen 1 and the bottom plate 211.

In some embodiments, refer to FIG. 7 and FIG. 8. The first adhesive layer 26 is disposed on the surface of the first reinforcing member 24 facing away from the bottom plate 211, and the screen 1 is adhered to the first adhesive layer 26 (refer to FIG. 13). Correspondingly, the second adhesive layer 27 is disposed on the surface of the second reinforcing member 25 facing away from the bottom plate 211, and the screen 1 is adhered to the second adhesive layer 27. In this way, connection stability between the screen 1 and the housing assembly 2 can be improved by using the first adhesive layer 26 and the second adhesive layer 27, avoiding falloff of the screen 1 from the housing assembly 2.

In some other embodiments, FIG. 14 is a front view of the housing assembly 2 according to some other embodiments of this application. The first adhesive layer 26 is disposed on the inner surface of the bottom plate 211, and the first adhesive layer 26 is disposed on a side of the first extension portion 241 far away from the third edge n3; or the first adhesive layer 26 is located between the first extension portion 241 and the third edge n3, and the screen 1 is adhered to the first adhesive layer 26. In this way, the first adhesive layer 26 and the first reinforcing member 24 do not overlap in thickness in a thickness direction of the display 10, helping reduce a thickness of the display 10, or helping increase a thickness of the first reinforcing member 24 to improve anti-bending and anti-torsional performance of the housing assembly 2.

In the foregoing embodiment, when the first adhesive layer 26 is located on a side of the first extension portion 241 far away from the third edge n3, a distance D4 between the first adhesive layer 26 and the first extension portion 241 along the X-axis direction may be less than or equal to 10% of the length L of the housing 21 in the X-axis direction. Specifically, the distance D4 between the first adhesive layer 26 and the first extension portion 241 along the X-axis direction may be 10%, 9%, 8%, 7%, 6%, 5%, 4%, 3%, or the like of the length L of the housing 21 in the X-axis direction. This is not specifically limited herein.

Correspondingly, still refer to FIG. 14. The second adhesive layer 27 is disposed on the inner surface of the bottom plate 211, and the second adhesive layer 27 is located on a side of the third extension portion 251 far away from the fourth edge n4; or the second adhesive layer 27 is located between the third extension portion 251 and the fourth edge n4, and the screen 1 is adhered to the second adhesive layer 27. In this way, the second adhesive layer 27 and the second reinforcing member 25 do not overlap in thickness in the thickness direction of the display 10, helping reduce the thickness of the display 10, or helping increase the thickness of the second reinforcing member 25 to improve the anti-bending and anti-torsional performance of the housing assembly 2.

In the foregoing embodiment, when the second adhesive layer 27 is located on a side of the third extension portion 251 far away from the fourth edge n4, a distance between the second adhesive layer 27 and the third extension portion 251 along the X-axis direction may be less than or equal to 10% of the length L of the housing 21 in the X-axis direction. Specifically, the distance between the second adhesive layer 27 and the third extension portion 251 along the X-axis direction may be 10%, 9%, 8%, 7%, 6%, 5%, 4%, 3%, or the like of the length L of the housing 21 in the X-axis direction. This is not specifically limited herein.

It should be noted that the following embodiments are described based on the first adhesive layer 26 being disposed on a surface of the first reinforcing member 24 facing away from the bottom plate 211 and the second adhesive layer 27 being disposed on a surface of the second reinforcing member 25 facing away from the bottom plate 211, but this shall not be considered as a special limitation to this application.

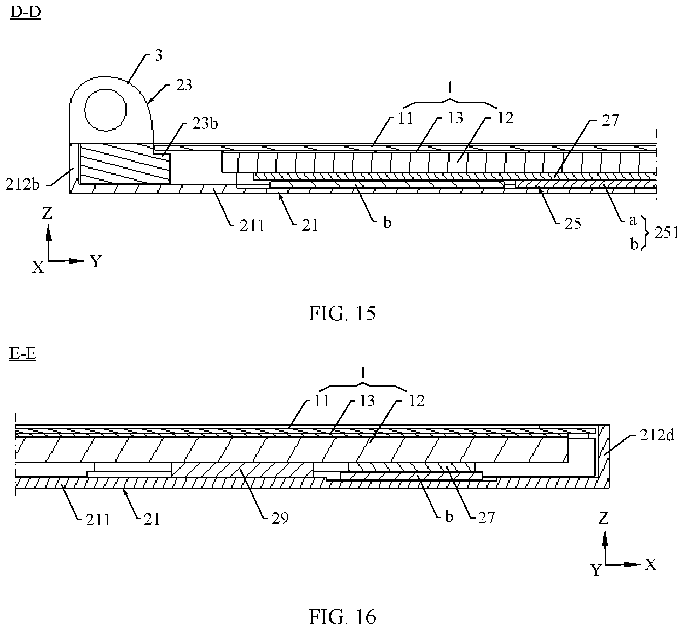

Based on the foregoing descriptions, refer to FIG. 6. The third extension portion 251 of the second reinforcing member 25 includes a third extension portion body a and a magnet body b. In some embodiments, FIG. 15 is a diagram of a cross-section structure of the display 10 shown in FIG. 4 along D-D. A thickness of the magnet body b in the Z-axis direction is less than a thickness of the third extension portion body a in the Z-axis direction. In this way, a surface that is of the magnet body b and that is configured to adhere to the second adhesive layer 27 is recessed relative to a surface that is of the third extension portion body a and that is configured to adhere to the second adhesive layer 27, so that adhesion robustness between the second adhesive layer 27 and the magnet body b decreases.

Based on the foregoing description, the fourth adhesive layer 29 is configured to compensate for adhesion strength between the second adhesive layer 27 and the magnet body b. Specifically, refer to FIG. 6 and FIG. 16. FIG. 16 is a diagram of a cross-section structure of the display shown in FIG. 4 along E-E. The fourth adhesive layer 29 is disposed on the inner surface of the bottom plate 211, and the fourth adhesive layer 29 is disposed on a side of the magnet body b far away from the fourth edge n4; or the fourth adhesive layer 29 is disposed between the magnet body b and the fourth edge n4, and the screen 1 is adhered to the fourth adhesive layer 29.

In the foregoing embodiment, when the fourth adhesive layer 29 is disposed on a side of the magnet body b far away from the fourth edge n4, a distance between the fourth adhesive layer 29 and the magnet body b along the X-axis direction may be less than or equal to 8% of the length L of the housing 21 in the X-axis direction. Specifically, the distance between the fourth adhesive layer 29 and the magnet body b along the X-axis direction may be 8%, 7%, 6%, 5%, 4%, 3%, 2%, or the like of the length L of the housing 21 in the X-axis direction. This is not specifically limited herein.

In this way, adhesion robustness between the housing assembly 2 and the screen 1 at the magnet body b can be improved by using the fourth adhesive layer 29.

Based on the foregoing descriptions, refer to FIG. 6. The fifth adhesive layer 00 is configured to further improve connection strength between the screen 1 and the housing assembly 2. Specifically, the fifth adhesive layer 00 is disposed on the inner surface of the bottom plate 211, the fifth adhesive layer 00 is disposed on a side of the second support member 23 far away from the second edge n2, and a distance D5 between the fifth adhesive layer 00 and the second support member 23 in the Y-axis direction may be less than or equal to 20% of the width W of the housing 21 in the Y-axis direction. Specifically, the distance D5 between the fifth adhesive layer 00 and the second support member 23 in the Y-axis direction may be 20%, 18%, 16%, 15%, 14%, 13%, 12%, 11%, 10%, 8%, 7%, 6%, or the like of the width W of the housing 21 in the Y-axis direction. This is not specifically limited herein.

In this way, the connection strength between the screen 1 and the housing assembly 2 can be further improved by using the fifth adhesive layer 00.

In some embodiments, to improve the connection strength between the screen 1 and the housing assembly 2, in some embodiments, the housing assembly 2 may further include a sixth adhesive layer (not shown in the figure). The sixth adhesive layer is disposed on the inner surface of the bottom plate 211, the sixth adhesive layer is disposed on a side of the first support member 22 far away from the first edge n1, and a distance between the sixth adhesive layer and the first support member 22 in the Y-axis direction is less than or equal to 15% of the width W of the housing 21 in the Y-axis direction. Specifically, the distance between the sixth adhesive layer and the first support member 22 in the Y-axis direction may be 15%, 14%, 13%, 12%, 11%, 10%, 8%, 7%, 6%, 5%, or the like of the width W of the housing 21 in the Y-axis direction. This is not specifically limited herein.

In this way, the connection strength between the screen 1 and the housing assembly 2 can be further improved by using the sixth adhesive layer.

The first adhesive layer 26, the second adhesive layer 27, the third adhesive layer 28, the fourth adhesive layer 29, the fifth adhesive layer 00, and the sixth adhesive layer may be pressure-sensitive adhesive, glue, backing adhesive, or the like. This is not specifically limited herein.

It should be noted that in some other embodiments, the first support member 22 may be replaced with a third reinforcing member, the third reinforcing member is disposed between the screen 1 and the bottom plate 211, the third reinforcing member includes a fifth extension portion extending along the first edge n1, and at least a part of a projection of the fifth extension portion on the bottom plate 211 is located within the projection of the display panel 121 in the screen 1 on the bottom plate 211; and/or the second support member 23 may alternatively be replaced with a fourth reinforcing member, the fourth reinforcing member is disposed between the screen 1 and the bottom plate 211, the fourth reinforcing member includes a sixth extension portion extending along the second edge n2, and at least a part of a projection of the sixth extension portion on the bottom plate 211 is located within the projection of the display panel 121 in the screen 1 on the bottom plate 211. In this way, the screen-to-body ratio of the screen 1 at the first edge n1 and/or the second edge n2 can be further increased.

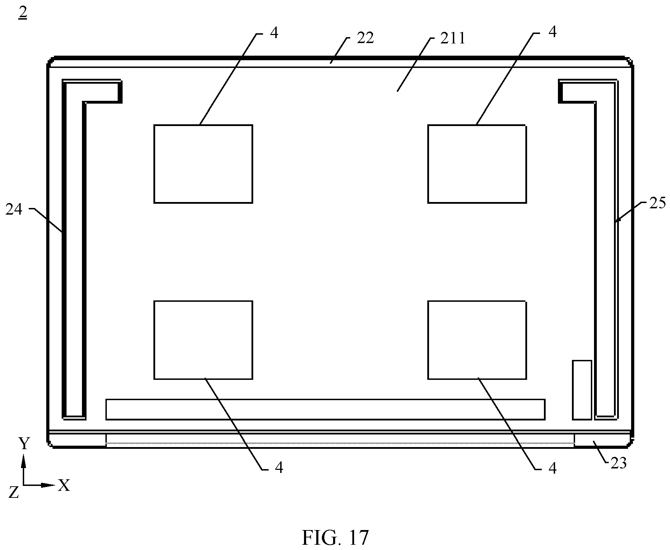

In some embodiments, FIG. 17 is a diagram of a structure of the housing assembly 2 according to some other embodiments of this application. Internal structures 4 are further disposed in a gap between the screen 1 and an area of the bottom plate 211 surrounded by the first support member 22, the second support member 23, the first reinforcing member 24, and the second reinforcing member 25. The internal structures include but are not limited to foam, circuit boards, graphite sheets, tinsel, cable, back adhesive, or the like.

In the descriptions of this specification, specific features, structures, materials, or characteristics may be combined in any one or more embodiments or examples in a suitable manner.

Finally, it should be understood that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A display, comprising:
a housing assembly, wherein the housing assembly comprises a housing and a first reinforcing member, the housing comprises a bottom plate, the bottom plate comprises a first edge and a second edge that are opposite to each other and a third edge connected between the first edge and the second edge, the bottom plate further comprises an inner surface, the first reinforcing member is disposed on the inner surface of the bottom plate, the first reinforcing member comprises a first extension portion, and the first extension portion is located at the third edge and extends along the third edge; and
a screen, wherein the screen is located on a side facing the inner surface, the first extension portion is located between the screen and the bottom plate, the screen comprises a display panel, at least a part of a projection of the first extension portion on the bottom plate is located within a projection of the display panel on the bottom plate.

2. The display according to claim **1,** wherein the first reinforcing member further comprises a second extension portion, and the second extension portion is connected to an end of the first extension portion facing the first edge and extends along the first edge.

3. The display according to claim 2, wherein the first reinforcing member further comprises a fifth extension portion, and the fifth extension portion is connected to an end of the first extension portion facing the second edge and extends along the second edge.

4. The display according to any one of claims 1 to 3, wherein a surface of the first reinforcing member facing away from the bottom plate is provided with a first adhesive layer, and the screen is adhered to the first adhesive layer.

5. The display according to any one of claims 1 to 3, wherein the inner surface of the bottom plate is provided with a first adhesive layer;
the first adhesive layer is located on a side of the first extension portion far away from the third edge, or the first adhesive layer is located between the first extension portion and the third edge; and
the screen is adhered to the first adhesive layer.

6. The display according to any one of claims 1 to 5, wherein material stiffness of the first reinforcing member is greater than material stiffness of the housing.

7. The display according to any one of claims 1 to 6, wherein a material of the first reinforcing member comprises one or more of aluminum, magnesium, iron, copper, and titanium elements; or one or more of plastic and a carbon fiber composite material.

8. The display according to any one of claims 1 to 7, wherein the bottom plate further comprises a fourth edge, the fourth edge is opposite to the third edge, and the fourth edge is connected between the first edge and the second edge;
the housing assembly further comprises a second reinforcing member, the second reinforcing member is disposed on the inner surface of the bottom plate, the second reinforcing member comprises a third extension portion, and the third extension portion is located at the fourth edge and extends along the fourth edge; and
the second reinforcing member is located between the screen and the bottom plate, and at least a part of a projection of the third extension portion on the bottom plate is located within the projection of the display panel on the bottom plate.

9. The display according to claim 8, wherein the third extension portion comprises a third extension portion body and a magnet body, the third extension portion body and the magnet body are arranged along a length direction of the fourth edge, and the magnet body is located between the third extension portion body and the second edge.

10. The display according to claim 9, wherein the inner surface of the bottom plate is further provided with a fourth adhesive layer, and the fourth adhesive layer is disposed on the inner surface of the bottom plate;
the fourth adhesive layer is located on a side of the magnet body far away from the fourth edge, or the fourth adhesive layer is located between the magnet body and the fourth edge; and
the screen is adhered to the fourth adhesive layer.

11. The display according to any one of claims 1 to 10, wherein the housing further comprises a third side plate, the third side plate is connected to the third edge, and the third side plate is located on a periphery of the screen; and
along a thickness direction of the display, a projection of the third side plate on the bottom plate does not overlap a projection of the screen on the bottom plate.

12. The display according to any one of claims 1 to 11, wherein the housing assembly further comprises a first support member and a second support member;
the first support member and the second support member are disposed on the inner surface of the bottom plate;
the first support member is located at the first edge and extends along the first edge, and the second support member is located at the second edge and extends along the second edge; and
the screen further includes a light-transmitting cover plate, the light-transmitting cover plate is located on a side of the display panel far away from the bottom plate, and the light-transmitting cover plate is stacked on and fixedly connected to the display panel, and the light-transmitting cover plate is fastened to at least a part of the first support member and at least a part of the second support member.

13. The display according to claim 12, wherein the first reinforcing member is located between the first support member and the second support member; and
along a length direction of the third edge, the first reinforcing member is in contact with or spaced apart from the first support member, and the first reinforcing member is in contact with or spaced apart from the second support member.

14. The display according to claim 13, wherein along a length direction of the third edge, the first reinforcing member is spaced apart from the first support member, and the first reinforcing member is spaced apart from the second support member; and
a distance between the first reinforcing member and the first support member in the length direction of the third edge and a distance between the first reinforcing member and the second support member in the length direction of the third edge are both less than or equal to 15% of a width of the housing in the length direction of the third edge.

15. The display according to any one of claims 12 to 14, wherein the material stiffness of the first reinforcing member is greater than material stiffness of the first support member and the second support member.

16. The display according to any one of claims 12 to 15, wherein at least one end portion of the first support member along the length direction of the first edge is provided with an elastic notch; or
the first support member comprises a middle portion segment and a first end portion segment that are arranged along the length direction of the first edge, the first end portion segment forms an end portion of the first support member along the length direction of the first edge, and material stiffness of the first end portion segment is less than material stiffness of the middle portion segment.

17. An electronic device, comprising a host and the display according to any one of claims 1 to 16, wherein the display is provided with a rotating shaft, and the display is rotatably connected to the host via the rotating shaft.
